# EUROPEAN PATENT APPLICATION

(11) **EP 1 062 919 A1**
(43) Date of publication of application: **27.12.2000**
(21) Application number: 99830398.6
(22) Date of filing: 24.06.1999
(51) Int. Cl.: A61C 19/055

(54) **Isoparallelometre with tool holding supports**

(71) Applicant: Omicron s.r.l., 47897 Fiorentino (SM)
(72) Inventor: Mauri, Mauro, 47835 Saludecio (IT)
(74) Representative: Lanzoni, Luciano

(57) **Abstract**

The present invention relates to an isoparallelometre with at least a tool holding support, comprising: a base (1); a load bearing column (2) mounted on the base (1); a central block (3) engaged to the load bearing column (2); at least an arm (38) engaged to the central block (3); and at least a tool holding support (41) engaged to the arm (38). The central block (3) is translatable along the load bearing column (2), between a first position (5a) wherein the central block (3) is situated in correspondence with the base (1), and a second position (5b) wherein the central block (3) is situated in correspondence with an end (6) of the load bearing column (2) opposite to the base (1). The arm (38) is slidingly translatable in a horizontal plane and is free to rotate in a horizontal plane. Actuating means (7) are provided to translate the central block (3) between the first position (5a) and the second position (5b). The actuating means (7) comprise: a support element (8); a lead screw (9), having its own vertical longitudinal axis; and rotation means (10) to rotate the lead screw (9) about its own axis. The lead screw (9) is rotatorily sustained by the support element (8) and is operatively engaged in a corresponding nut screw (11) obtained in the central block (3). The tool holding support (41) is rigidly mounted to one extremity of the arm (38), and a second tool holding support (42) is provided, rigidly mounted to the other extremity of the arm (38), the tool holding supports serving as stops for the translation of the arm (38). The tool holding support (41) is free to move according to independent cylindrical co-ordinates.

## Description

The present invention relates to an isoparallelometre with tool holding support of the type comprising the characteristics expressed in the preamble to claim 1.

In the odontotechnical field instruments called isoparallelometres exist, able to perform certain precise operations on models of dental arches, on models of dental prostheses and on the prostheses themselves. The main purpose of these instruments is to determine the direction of insertion of the dental prostheses on the dental arches. Subsequently, these instruments are used for the correct positioning and fixing, on the models of the dental arches, of the attachment fittings for the prostheses. In general, isoparallelometres can also be used for other operations, for instance for milling or shaping the model or the prostheses. This can generally be accomplished by replacing the tool, or adding additional accessories.

The aforesaid operations entail require the tool head to move frequently within an ample working area, while remaining in a horizontal plane. The position of such horizontal plane must be modifiable in case of need.

Commonly, isoparallelometres comprise a base and a fixed load bearing column extending vertically from the base. To the load bearing column is usually engaged, by means of a collar axial thereto, at least one arm fitted with a tool holding support.

The arm is able, thanks to the collar, both to slide vertically along the load bearing column to allow the displacement of the tool in height, and to rotate about the axis of the load bearing column itself. To the collar are usually associated locking means to fasten the arm with respect to the load bearing column. Such locking means generally comprise a clamp engaged to the column immediately below the collar and a screw engaged to the collar. The clamp provides a stop for the collar, allowing the arm to rotate but preventing the arm from falling along the load bearing column. The screw prevents the collar from rotating and translating, pressing on the load bearing column. The arm can be structured in segments, hinged together to allow their relative rotation in a horizontal plane. Further locking means can be provided, destined, if need be, to prevent such relative rotations.

The tool holding support can be engaged to the terminal segment of the arm by means of mechanical connection means, which allow the tool to translate along a vertical axis. This translation can also be obtained through mechanical means positioned on the tool holder itself, such as sliding bars in guides fitted with locking means, or micrometric screws.

Known isoparallelometres can provide a sufficient coverage of the working space, however they are not free of some drawbacks.

The coverage of the working space is obtained by means of a very complex structure, to activate which the operator is forced to perform complicated manoeuvres.

To allow the frequent movements of the tool head in the horizontal work plane, the arm segments must continually be reoriented with respect to one another. This occurs in certain conditions, wherein the interaction of the different segments of the arm may render working areas proximate to the arm itself inaccessible to the tool. Such frequent relative rotations of the arm segments increase the risk of interfering with the work performed, thereby compromising its result. For instance, one risks impacting against the attachment fittings already positioned, thereby altering their parallelism.

The coverage of the entire horizontal working plane at a pre-set height is obtained by means of a high number of hinges, necessary to allow the relative rotation of the arm segments and the rotation of the arm about the load bearing column. The presence of said hinges and the length of the arm determine play which causes an oscillation of the horizontal work plane. Moreover, it is difficult for the tool head, during its frequent movements, to remain firmly in said plane. To fasten or to free the position of the tool head in the horizontal work plane, it is necessary to lock or unlock each hinge, acting on respective locking means.

To allow axial milling, i.e. milling along a straight line belonging to the horizontal work plane, an accessory needs to be added to the system. This accessory generally comprises a guide, engaged between the tool head and the load bearing column, which constrains the tool head to move along said straight line.

The movement of the arm, with such a complicated structure, presents dead points. In the presence of play, overcoming said dead points can require forcing the motion of the tool. Once the dead point is overcome, the tool can partially slip out of the operator's hand, thereby compromising the work. In the case of prosthesis milling, this can cause damages to said prosthesis, with the consequent need either to replace it or to repair it; when positioning attachment fittings, this can determine the impact of the tool or of the operator's hand on the attachment fittings already positioned, thereby altering their parallelism. All this wastes time and causes economic losses.

Certain work processes often require modifying the height of the horizontal work plane with precision, while maintaining the position of the tool head fixed within said plane. Known isoparallelometres allow this only by means of an appropriate accessory screw, engaged to the tool holding support and destined to vary the height of the tool holding support itself. Said screw generally has limited travel. For greater modifications to the height of the horizontal work plane the user is forced to act on the collar engaging the arm to the load bearing column. For this purpose it is necessary to unlock the collar, acting on the related locking means, simultaneously supporting the arm manually to prevent it from sliding along the load bearing column. Having raised or lowered the arm, always supporting it manually, the collar is locked again acting on the related locking means. In addition to being complicated, such a manoeuvre does not allow precisely to position the horizontal work plane, which requires the use of additional precision systems that adjust the height of the tool. The rotatory motion of the arm about the axis of the load bearing column and the translation motion of the arm along the load bearing column are not independent, since they are obtained by means of the collar. Hence, while adjusting the height, the position of the tool within the horizontal work plane is generally lost. This position then needs to be searched for again, with the deriving waste of time.

An accessory is known which, positioned immediately underneath the means for locking the collar, comprises an externally threaded tubular element, coaxial to the load bearing column and integral with the base, on the thread of said tubular element being engaged a sleeve shaped nut screw. The rotation of the nut screw allows to raise or lower the collar without concerning oneself with supporting the arm. This solution, however, does not allow to maintain, while adjusting the height, the position of the tool in the horizontal work plane and greatly limits the translation motion of the collar along the load bearing column. During the work processes, the height of the horizontal work plane can vary undesirably, due to the sliding along the load bearing column by the clamp and screw used as means for locking the collar. Such sliding is favoured by the pressure imparted by the operator on the prostheses during the milling or working operations, as well as by the vibrations caused by the tool in use, for instance a mill or turbine.

The aim of the present invention is to eliminate the above drawbacks. The invention, as it is characterised by the claims, solves the problem of creating an isoparallelometre with tool holding heads of great versatility, able to allow the tool head to move freely within the entire work space according to independent cylindrical co-ordinates, with a simple, stable and solid structure that allows high precision work processes simplifying all necessary operations.

In particular, this result is attained by uncoupling the rotatory motion of the arm about the axis of the load bearing column from the vertical translation motion and guaranteeing a translation of the arm in a horizontal plane that is independent from the other two motions.

The advantages obtained by means of the present invention essentially consist of: freedom, fluidity and absence of dead points in the movement of the tool head within the horizontal work plane; amplitude of the work space, extended from the base to the extremity of the load bearing column; precision and simplicity in the adjustment of the height of the horizontal work plane and simultaneous maintenance of the position of the tool head in the plane itself; stability of the horizontal work plane under all conditions; minimisation of all play; simplicity of the structure with consequent reduced risk of failures, reduced need for maintenance and reduced costs; reduced working times.

The invention is described in a more detailed manner below with the aid of drawings showing an embodiment provided purely by way of non limiting example.

Figure 1 is a perspective view of an isoparallelometre obtained in accordance with the presence invention, together with a schematic depiction of the movements allowed to its parts.

Figure 2 is a schematic representation of the work space covered by the isoparallelometre of the present invention and of the type of movements possible for the tool holding support of the isoparallelometre itself.

Figure 3 is a perspective view of an isoparallelometre obtained in accordance with the present invention, with its arm rotated by 180° with respect to the illustration in Figure 1 and characterised by some variations.

Figure 4 schematically shows, in a perspective view, a ball bearing sleeve, used advantageously and characteristically in the present invention.

Figure 5 shows a first alternative and equivalent embodiment of the isoparallelometre of the present invention.

Figures 6 shows a second alternative and equivalent embodiment of the isoparallelometre of the present invention

A preferred embodiment of the isoparallelometre of the present invention comprises a base 1, whereon a load bearing column 2 is mounted. To the load bearing column is engaged a central block 3. The central block 3 presents a first hole 4, with a diameter corresponding to the diameter of the cross section of the load bearing column 2. The load bearing column 2, inserted in the first hole 4, serves as a guide for the translation of the central block 3. This translation can take place between a first position 5a, wherein the central block 3 is situated in correspondence with the base 1, and a second position 5b, wherein the central block 3 is situated in correspondence with an extremity 6 of the load bearing column 2 opposite to the base 1. Actuating means 7 are provided to translate the central block 3, along the load bearing column 2, between the first position 5 and the second position 5b. Said actuating means 7 comprise: a support element 8; a lead screw 9, having its own vertical longitudinal axis; and rotation means 10 to rotate the lead screw 9 about its own axis. The lead screw 9 is rotatorily sustained by said support element 8 and is operatively engaged in a corresponding nut screw 11 obtained in the central block 3.

In a first, preferred, embodiment of the present invention, the support element 8 is engaged to the load bearing column 2 at an invariable and pre-set distance from the base 1, and the longitudinal axis of the lead screw 9 and the longitudinal axis of the load bearing column 2 are parallel, but not coincident.

The support element 8 cannot translate along the load bearing column 2 and prevents, by the engagement of the lead screw 9 in the nut screw 11, the central block 3 from falling. The action of the rotation means 10 produces the rotation of the lead screw 9 about its own longitudinal axis.

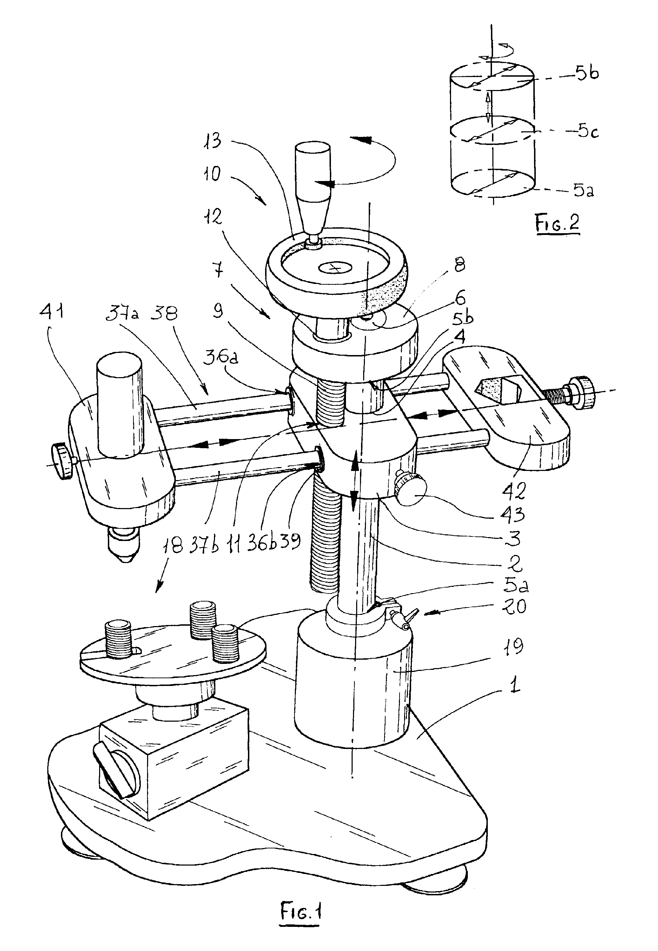

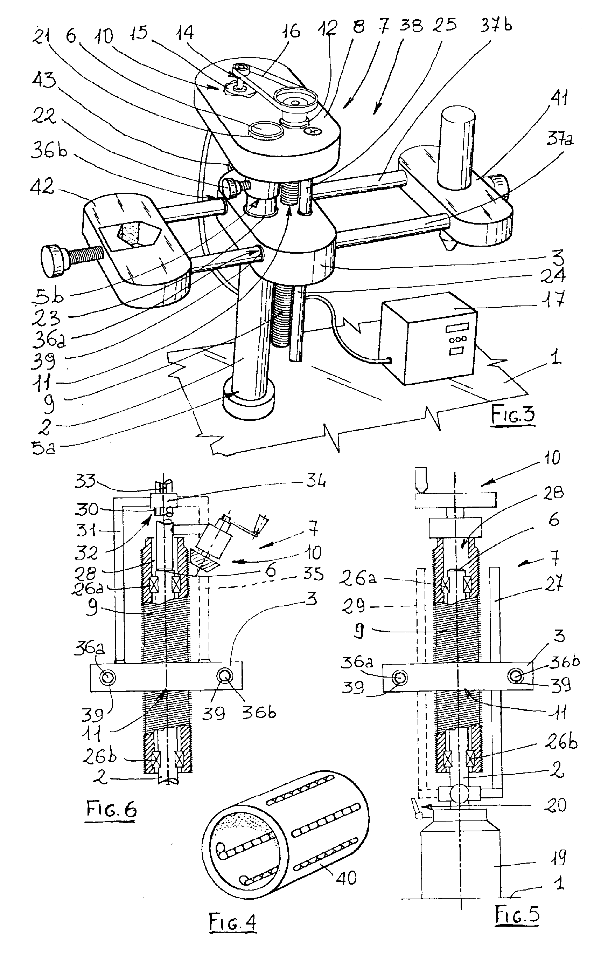

The friction, present in the engagement of the lead screw 9 with the nut screw 11, tends to make also the central block 3 rotate together with the lead screw 9. The insertion of the load bearing column 2 in the first hole 4 and the fact that the axes of the load bearing column 2 and of the lead screw 9 do not coincide determine a geometric interference on the rotation of the central block 3. As a result, the interaction between the lead screw 9 and the nut screw 11 causes only the vertical motion of the central block 3 along the load bearing column 2. The displacement thus produced can be controlled with great sensitivity and precision thanks to the system constituted by the lead screw 9 and by the nut screw 11. A first bearing 12 is conveniently inserted between the lead screw 9 and the support element 8 to improve the rotation of the lead screw 9 and confer greater sensitivity and precision to the positioning of the central block 3 along the load bearing column 2. When the rotation means 10 are idle, no locking means are necessary to maintain the central block 3 in its position along the load bearing column 2: the interaction between the lead screw 9 and the nut screw 11 guarantees that the position of the central block 3 along the load bearing column 2 is stable and insensitive to any vibration which may be produced by the operation of a tool. Advantageously, in the embodiments of the present invention shown in Figure 1 and in Figure 3, the support element 8 is located in correspondence with the extremity 6 of the load bearing column 2 opposite to the base 1. In this way, the support element 8 does not hinder the free translation of the central block 3 along the load bearing column 2 and, at the same time, it provides a natural stop element to the translation. Alternatively, the support element 8 can be positioned in correspondence with the base 1 or incorporated in the base 1 itself, maintaining the freedom of the translation motion of the central block 3. The rotation means 10 can comprise, as in Figure 1, a handwheel 13 mounted at one extremity of the lead screw 9 itself. Alternatively, the rotation means 10 can comprise motor driving means 14 which, in a particular embodiment of the present invention shown in Figure 3, in turn comprise a gear motor 15 and connecting organs 16 able to transfer the motion from the gear motor 15 to the lead screw 9. Advantageously, said motor driving means 14 can be subjected to an electronic automation device 17, together with means for measuring the altitude of the central block 3 as a function of the pitch of the lead screw 9. This can allow to memorise the altitudes of the various horizontal work planes 5c whereto belong the reference points of the dental arch model or of the prosthesis situated on a model holder base 18 and to plan interventions on said horizontal work planes 5c. This is very useful when a base 1 is available that is ample enough to allow setting down more than one model holder base 18 and allows to save time.

In an embodiment of the present invention shown in Figure 1, the support element 8 is rigidly engaged to the load bearing column 2, whilst the load bearing column 2 is able to rotate about its own longitudinal axis. The pivoting engagement of the load bearing column 2 to the base 1 can be obtained through the prior art, employing a pair of bearings and a spacer, contained in a column holder element 19 integral to the base 1. Advantageously, the column holder element 19 can be incorporated in the base 1, to allow the utmost freedom in the vertical translation motion of the central block 3 along the load bearing column 2. First locking means 20 to fasten the load bearing column 2 with respect to the base 1 prevent, when necessary, the rotation of the load bearing column 2 about its own longitudinal axis. In the embodiment of the present invention shown in Figure 1, such first locking means 20 to fasten the load bearing column 2 with respect to the base 1 are realised by means of a clamp integral to the column holder element 19. The rotation of the load bearing column 2 about its own longitudinal axis determines the rotation of the support element 8 about the same axis. The lead screw 9 participates in this rotation, transmitting it to the central block 3 because of the geometric interference due to the engagement of the lead screw 9 in the nut screw 11. The central block 3 thus rotates about the longitudinal axis of the load bearing column 2 without translating along the load bearing column 2 itself. After acting on the first locking means 20 to fasten the load bearing column 2 with respect to the base 1, thereby blocking the rotation of the load bearing column 2 about its own longitudinal axis, it is always possible to translate the central block 3 along the load bearing column 2 acting on the rotation means 10 without causing any rotation of the central block 3 itself. In this way, the translation motion of the central block 3 along the load bearing column 2 is made independent from the rotatory motion of the central block 3 about the longitudinal axis of the load bearing column 2.

In a variation of the present invention shown in Figure 3, the load bearing column 2 is fixed with respect to the base 1, whilst the support element 8 is rotatorily engaged to the load bearing column 2. This pivoting engagement of the support element 8 to the load bearing column 2 can be advantageously realised at the extremity 6 of the load bearing column 2 opposite to the base 1 by means of a second bearing 21. First locking means 22 to fasten the support element 8 with respect to the load bearing column 2 prevent, if need be, the rotation of the support element 8 about the longitudinal axis of the load bearing column 2. The rotation of the support element 8 about the longitudinal axis of the load bearing column 2 determines the rotation of the lead screw 9 about the axis itself, transmitting such rotation also to the central block 3 because of the geometric interference due to the engagement of the lead screw 9 in the nut screw 11. The central block 3 thus rotates about the longitudinal axis of the load bearing column 2 without translating along the load bearing column 2. Conveniently a third bearing 23 is positioned between the load bearing column 2 and the central block 3 to favour the rotation of the central block 3 itself. After acting on the first locking means 22 to fasten the support element 8 with respect to the load bearing column 2, in such a way as to block the rotation of the support element 8 about the longitudinal axis of the load bearing column 2, it is always possible to translate the central block 3 along the load bearing column 2 acting on the rotation means 10 without causing any rotation in the central block 3 itself.

In this way, the translation motion of the central block 3 along the load bearing column 2 is made independent from the rotatory motion of the central block 3 about the longitudinal axis of the load bearing column 2.

Advantageously, an auxiliary guide column 24 can be added, simultaneously engaged to the central block 3 and to the support element 8, having its own longitudinal axis parallel to the longitudinal axis of the load bearing column 2. The auxiliary guide column 24 has the purpose of making more secure and better guided the mutual translation of the support element 8 and of the central block 3.

The auxiliary guide column 24 can be integral to the support element 8 and develop towards the central block 3. The central block 3 presents a second hole 25, whose diameter corresponds to the diameter of the cross section of the auxiliary guide column 24. The auxiliary guide column 24 is inserted in the second hole 25 and slidingly engages the central block 3 to reduce any play that may be present between the central block 3 and the load bearing column 2 in correspondence with the first hole 4. Equivalently, the auxiliary guide column 24 can be integral to the central block 3, develop towards the support element 8 and be slidingly engaged to the support element 8 itself. This configuration also reduces any play which may be present between the central block 3 and the load bearing column 2 in correspondence with the first hole 4. The longitudinal axis of the load bearing column 2, the longitudinal axis of the lead screw 9 and the longitudinal axis of the auxiliary guide column 24 are parallel, but do not coincide. In a preferred embodiment of the present invention, the longitudinal axis of the load bearing column 2, the longitudinal axis of the lead screw 9 and the longitudinal axis of the auxiliary guide column 24 intersect a horizontal plane according to points that constitute the vertices of a triangle in said horizontal plane. The above particular configuration and the engagement of the lead screw 9 in the nut screw 1 I co-operate to eliminate completely all oscillations in the work plane due to play in correspondence with the central block 3.

In an alternative and equivalent embodiment of the present invention, shown in Figure 5, the load bearing column 2 is able to rotate about its own longitudinal axis and the support element 8 coincides with the load bearing column 2. The lead screw 9 is constituted by an externally threaded tubular element, external and coaxial to the load bearing column 2. The lead screw 9 is rotatorily supported by the load bearing column 2. As shown in Figure 5, this rotatory support can be realised by means of a pair of bearings 26a and 26b, engaged to the load bearing column 2 and to the inner surface of the lead screw 9 by means of appropriate seats or geometric interference means. The lead screw 9 is still operatively engaged in a corresponding nut screw 11 obtained in the central block 3 to translate the central block 3 along the load bearing column 2. The load bearing column 2 supports the lead screw 9 and prevents, through the engagement of the lead screw 9 in the nut screw 11, the central block 3 from falling. The rotation means 10 are directly engaged to the top of the lead screw 9. A first geometric interference element 27 is also provided, rigidly engaged to the load bearing column 2 and developing mainly along its own longitudinal axis parallel to the longitudinal axis of the load bearing column 2. The central block 3 is slidingly guided on the first geometric interference element 27. Conveniently, the first geometric interference element 27 can be engaged to an extremity of the load bearing column 2, in order to guarantee the utmost possible freedom of movement to the central block 3. If this engagement is realised in correspondence with the base 1, the rotation means 10 can also be coaxial with the lead screw 9, as shown in Figure 5. If, instead, it is preferred to engage the first geometric interference element to the extremity 6 of the load bearing column 2 opposite to the base 1, the rotation means 10 must not obstruct the opening 28 at the top of the lead screw 9. This condition can be met, for instance, by applying a bevel gear pair. In addition to guiding the motion of the central block 3 along the load bearing column 2, the first geometric interference element 27, having its longitudinal axis not coincident with the longitudinal axis of the load bearing column 2 and of the lead screw 9, allows once again to uncouple the translation motion of the central block 3 along the load bearing column 2 from the rotatory motion of the central block about the longitudinal axis of the load bearing column 2. By blocking the rotation of the load bearing column 2 through the first locking means 20 to fix the load bearing column 2 with respect to base 1 and acting on the rotation means 10, only the vertical translation of the central block 3 is obtained. In the rotation of the load bearing column 2 about its own longitudinal axis the first geometric interference element 27 allows the lead screw 9 and the central block 3 to rotate integrally with the load bearing column 2, in spite of the presence of the pair of bearings 26a and 26b.

Conveniently a second geometric interference element 29 can be added, similar to the first geometric interference element 27 and positioned in such a way that the longitudinal axis of the load bearing column 2, the longitudinal axis of the first geometric interference element 27 and the longitudinal axis of the second geometric interference element 29 intersect a horizontal plane according to points that constitute the vertices of a triangle in said horizontal plane. The above particular configuration and the engagement of the lead screw 9 in the nut screw 11 co-operate to eliminate completely all oscillations in the work plane due to play in correspondence with the central block 3.

In a second, alternative and equivalent embodiment of the present invention, shown in Figure 6, and constituting a variation of the embodiment shown in Figure 5, a bar 30, whose longitudinal axis coincides with the longitudinal axis of the load bearing column 2, is rigidly engaged to the extremity 8 of the load bearing column 2 opposite to the base 1. The rotation means 10 must not obstruct the opening 28 at the top of the lead screw 9 to allow the engagement of the bar 30 to the extremity 6 of the load bearing column 2 opposite to the base 1. This condition can be met, for instance, through the application of a bevel gear pair.

A first geometric interference and guiding element 31 is engaged to the bar 30 by means of a restraint 32 able to slide solely along the longitudinal axis of the bar 30 itself. The restraint 32 can be realised, for instance, by means of the coupling between vertical grooves 33 obtained on the bar 30 and a ring 34 shaped counter to said vertical grooves 33. The first geometric interference and guiding element 31 is also rigidly engaged to the central block 3.

The reaction of the restraint 32 to the relative rotation of the central block 3 and of the load bearing column 2 allows again to uncouple the translation motion of the central block 3 along the load bearing column 2 from the rotatory motion of the central block 3 about the longitudinal axis of the load bearing column 2. Conveniently, the bar 30 is sufficiently long to allow the translation motion of the central body 3 between the first position 5a and the second position 5b.

Conveniently a second geometric interference and guiding element 35 can be added, similar to the first geometric interference and guiding element 31 and positioned in such a way that the longitudinal axis of the load bearing column 2, the longitudinal axis of the first geometric interference and guiding element 31 and the longitudinal axis of the second geometric interference and guiding element 35 intersect a horizontal plane according to points that constitute the vertices of a triangle in said horizontal plane. The above particular configuration and the engagement of the lead screw 9 in the nut screw 11 co-operate to eliminate completely all work plane oscillations due to play in correspondence with the central block 3.

In a preferred embodiment of the present invention, the central block 3 presents two auxiliary guide seats 36a and 36b, in the form of through holes with parallel longitudinal axes that lie in a horizontal plane. Two rods 37a and 37b, of circular cross section and positioned parallel to each other in a horizontal plane, are inserted in said auxiliary guide seats 36a and 36b to form an arm 38 engaged to the central block 3. The arm 38 is thus able slidingly to translate in a horizontal plane, by means of the sliding of the rods 37a and 37b in the auxiliary guide seats 36a and 36b. Two rolling friction sliding means 39 are provided between each of the rods 37a and 37b and each of the auxiliary guide seats 36a and 36b, to facilitate the smooth translation of the arm 38 and to eliminate mechanical play due to the insertion of the rods 37a and 37b in the auxiliary guide seats 36a and 36b. Advantageously, the rolling friction sliding means 39 can be obtained by means of ball bearing sleeves 40, for instance of the type INA JK GERMANY KH 1228 /P/PP.

At one extremity of the arm 38 is rigidly mounted a first tool holding support 41. To the other tool holding support 41 can be associated a spring loaded spindle or the type known in the odontotechnical field for supporting attachment restraints or probes of various kinds. A second tool holding support 42 is provided, rigidly mounted to the other extremity of the arm 38 and fitted with a universal clamp for housing any tool such as mills or turbines. Advantageously, the first tool holding support 41 and the second tool holding support 42 serve a limit stops for the translation of the arm 38. The arm 38 is engaged to the central block 3 in such a way as to participate in the movements of the central block 3 itself and thus is free to rotate in a horizontal plane. The translation motion of the arm 38 in the horizontal plane is uncoupled from the movements of the other parts of the device and does not interfere therewith. Therefore, the first tool holding support 41 or the second tool holding support 42 is free to move according to independent cylindrical co-ordinates throughout the work space shown schematically in Figure 2.

The particular shape of the arm 38 minimises the risk of inappropriate play. The movement of the tool holding supports in the horizontal work plane is made extremely fluid and immediately executable. Also provided are second locking means 43 to fasten the arm with respect to the central block. By also activating all provided locking means, it is always possible to act on the rotation means 10 to translate the central body 3 along the load bearing column 2. Hence it is always possible with great precision and simplicity to translate vertically the head of a tool inserted in any one of the tool holding supports without losing track of the working point in the horizontal plane.

## Claims

1. Isoparallelometre with at least a tool holding support, comprising:
a base (1);
a load bearing column (2) mounted on the base (1);
a central block (3) engaged to the load bearing column (2);
at least an arm (38) engaged to the central block (3);
and at least a tool holding support (41) engaged to the arm (38);
characterised:
in that the central block (3) is translatable along the load bearing column (2), between a first position (5a) wherein the central block (3) is situated in correspondence with the base (1) and a second position (5b) wherein the central block (3) is situated in correspondence with an extremity (6) of the load bearing column (2) opposite to the base (1);
in that the arm (38) is slidingly translatable in a horizontal plane and is free to rotate in a horizontal plane;
and in that it comprises actuating means (7) to translate the central block (3) between the first position (5a) and the second position (5b);
so that the tool holding support (41) is free to move according to independent cylindrical co-ordinates.

2. Device according to claim 1, characterised in that said tool holding support (41) is mounted rigidly to an extremity of the arm (38), and in that a second tool holding support (42) is provided, rigidly mounted to the other extremity of the arm (38), the tool holding supports serving as stops for the translation of the arm (38).

3. Device according to claim 1 or 2, characterised in that the actuating means (7) comprise:
a support element (8), engaged to the load bearing column (2) at an invariable and pre-set distance from the base (1);
a lead screw (9), having its own longitudinal axis parallel to the longitudinal axis of the load bearing column (2), rotatorily sustained by said support element (8) and operatively engaged in a corresponding nut screw (11) obtained in the central block (3) to translate the central block (3) along the load bearing column (2);
and rotation means (10) to rotate the lead screw (9) about its own longitudinal axis.

4. Device according to claim 3, characterised in that:
the load bearing column (2) is able to rotate about its own longitudinal axis;
and in that the support element (8) is rigidly engaged to the load bearing column (2).

5. Device according to claim 3, characterised in that:
the load bearing column (2) is fixed with respect to the base (1);
and the support element (8) is rotatorily engaged to the load bearing column (2).

6. Device according to claim 4, characterised in that it further comprises first locking means (20) to fasten the load bearing column (2) with respect to the base (1) and second locking means (43) to fasten the arm (38) with respect to the central block (3).

7. Device according to claim 5, characterised in that it further comprises first locking means (22) to fasten the support element (8) with respect to the load bearing column (2) and second locking means (43) to fasten the arm with respect to the central block.

8. Device according to any of the claims from 3 to 7, characterised in that it further comprises an auxiliary guide column (24) having longitudinal axis parallel to the longitudinal axis of the load bearing column (2), said auxiliary guide column (24) being simultaneously engaged to the central block (3) and to the support element (8) to guide the mutual translation of the support element (8) and of the central block (3).

9. Device according to claim 8, characterised in that the longitudinal axis of the load bearing column (2), the longitudinal axis of the lead screw (9) and the longitudinal axis of the auxiliary guide column (24) intersect a horizontal plane according to points that constitute the vertices of a triangle in said horizontal plane.

10. Device according to claim 1 or 2, characterised in that the load bearing column (2) is able to rotate about its own longitudinal axis and in that the actuating means (7) comprise:
a lead screw (9) constituted by an externally threaded tubular element, said tubular element being external and coaxial to the load bearing column (2), said lead screw (9) being rotatorily supported by the load bearing column (2), said lead screw (9) further being operatively engaged in a corresponding nut screw (11) obtained in the central block (3) to translate the central block (3) along the load bearing column (2);
at least a geometric interference element (27) rigidly engaged to the load bearing column (2) and developing mainly along its longitudinal axis parallel to the longitudinal axis of the load bearing column (2), on said geometric interference element (27) being slidingly engaged the central block (3);
and rotation means (10) to rotate the lead screw (9) about its own axis.

11. Device according to claim 1 or 2, characterised in that the load bearing column (2) is able to rotate about its own longitudinal axis and in that the actuating means (7) comprise:
a lead screw (9) constituted by an externally threaded tubular element, said tubular element being external and coaxial to the load bearing column (2), said lead screw being rotatorily sustained by the load bearing column (2), said lead screw (9) being also operatively engaged in a corresponding nut screw (11) obtained in the central block (3) to translate the central block (3) along the load bearing column (2);
a bar (30) having a longitudinal axis coinciding with the longitudinal axis of the load bearing column (2), rigidly engaged to the extremity (6) of the load bearing column (2) opposite to the base (1);
at least a geometric interference and guiding element (31) rigidly engaged to the central block (3) and engaged to the bar (30) by means of a restraint (32) able to slide solely along the longitudinal axis of the bar (30);
and rotation means (10) to rotate the lead screw (9) about its own axis.

12. Device according to claim 10 or 11, characterised in that it further comprises first locking means (20) to fasten the load bearing column (2) with respect to the base (1) and second locking means (43) to fasten the arm (38) with respect to the central block (3).

13. Device according to claim 3 or 10 or 12, characterised in that the rotation means (10) to rotate the lead screw (9) comprise a handwheel (13) mounted to one extremity of the lead screw itself.

14. Device according to claim 3 or 10 or 11 or 12, characterised in that the rotation means (10) to rotate the lead screw (9) comprise:
motor driving means (14) subjected to an electronic automation device (17);
means for measuring the altitude of the central block (3) as a function of the pitch of the lead screw (9), subjected to the electronic automation device (17).

15. Device according to any of the previous claims, characterised in that the arm (38) comprises at least a rod (37) slidingly engaged along its own longitudinal axis in the central block (3), the central block (3) presenting at least an auxiliary guide seat (36) of the rod (37) and rolling friction sliding means (39) inserted in said auxiliary guide seat (36) and active on said rod (37) to facilitate the translation of the arm (38).

16. Device according to claim 15, characterised in that the arm (38) comprises: at least two rods (37a, 37b) positioned mutually parallel in a horizontal plane; and at least two rolling friction sliding means (39) active on said rods (37a, 37b).

17. Device according to claim 15 or 16, characterised in that the rolling friction sliding means (39) comprise at least one ball bearing sleeve (40) for each rod.

18. Device according to claim 15 or 16, characterised in that the rolling friction sliding means (39) comprise at least two ball bearing sleeves (40) for each rod.
